(19) Europäisches Patentamt
European Patent Office
Office européen des brevets

(11) **EP 4 057 492 B1**

(12) **EUROPEAN PATENT SPECIFICATION**

(45) Date of publication and mention
of the grant of the patent:
**24.06.2026 Bulletin 2026/26**

(21) Application number: **22161316.9**

(22) Date of filing: **10.03.2022**

(51) International Patent Classification (IPC):
**H02M 3/335** $^{(2006.01)}$  **H02M 1/00** $^{(2006.01)}$
**H02M 3/158** $^{(2006.01)}$

(52) Cooperative Patent Classification (CPC):
**H02M 3/335; H02M 1/0077; H02M 3/1584;
H02M 3/33507**

---

(54) **CONFIGURABLE POWER CONVERTER FOR CHARGING AN ELECTRIC VEHICLE**

KONFIGURIERBARER STROMWANDLER ZUM LADEN EINES ELEKTRISCHEN FAHRZEUGS

CONVERTISSEUR DE PUISSANCE CONFIGURABLE POUR CHARGER UN VÉHICULE ÉLECTRIQUE

---

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.03.2021 DE 102021106048**

(43) Date of publication of application:
**14.09.2022 Bulletin 2022/37**

(73) Proprietor: **Siemens Aktiengesellschaft
80333 München (DE)**

(72) Inventors:
• **GHAT, Mahendra
400095 Mumbai, Maharashtra (IN)**
• **UNADE, Mahadeo
410210 Navi Mumbai, Maharashtra (IN)**

(74) Representative: **Patentanwaltskanzlei WILHELM
& BECK
Prinzenstraße 13
80639 München (DE)**

(56) References cited:
EP-A1- 3 333 005      CN-A- 101 442 259
CN-A- 108 649 664     CN-A- 108 718 156
CN-B- 105 846 465     US-A1- 2005 270 812
US-A1- 2020 139 839

• LU YANGJUN ET AL: "Ultra-Wide Output Voltage
Range Power Supply Based on Modular
Switched-Converter Principle", IEEE
TRANSACTIONS ON POWER ELECTRONICS,
INSTITUTE OF ELECTRICAL AND
ELECTRONICS ENGINEERS, USA, vol. 35, no. 1,
1 January 2020 (2020-01-01), pages 94 - 106,
XP011751947, ISSN: 0885-8993, [retrieved on
20191021], DOI: 10.1109/TPEL.2019.2912724

**Description**

The present disclosure relates to a power converter. More particularly, the present disclosure relates to a selectively configurable power converter employable in DC fast charging of Electric Vehicles (EVs).

EVs are being adopted worldwide as an alternative to the traditional internal combustion-based vehicles. Therefore, there arises a growing demand for the development of charging infrastructure for fast charging of these EVs.

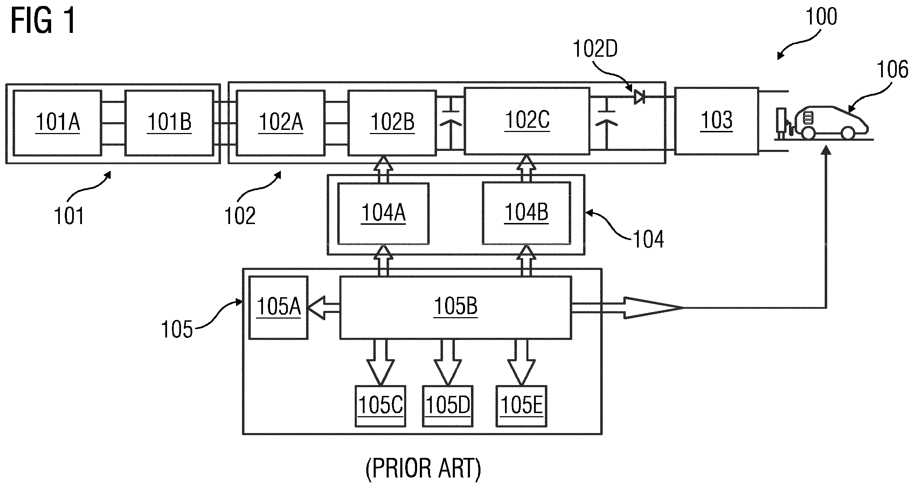

One of the methods for fast charging is a DC fast charger. FIG 1 illustrates a block diagram of a DC charger 100 employed in charging of EVs 106, according to state of the art. The DC charger 100 includes an input module 101, a power electronic module 102 also referred to as a power converter 102, and an output module 103 electrically coupled to one another as shown in FIG 1. The input module 101 has a 3-phase AC voltage supply Vac coming from the power grid 101A and an input side protection unit 101B. The power converter 102 has an input filter 102A, a 3-phase AC to DC converter 102B such as a 3-phase pulse width modulation (PWM) converter and an isolated DC-DC converter 102C, electrically coupled with one another. The output module 103 is an output protection unit that provides DC voltage at its output which is used by an EV 106 for DC fast charging. The DC charger 100 also includes a controller module 104 having one or more controllers 104A, 104B. The controller module 104 is electrically coupled with the power converter 102 for controlling the 3-phase pulse width modulation (PWM) converter 102B and the isolated DC-DC converter 102C.

The DC charger 100 also includes a software module 105 having a user interface 105A such as a human machine interface (HMI) electrically coupled with a communication controller module 105B which in turn communicates with portable electronic devices 105C such as cell phones, a cloud communication network 105D and/or a user device 105E operated by the power grid 101A. The communication controller module 105B also communicates with the EV 106.

The DC output voltage being provided to the EV 106 should conform to the battery voltage rating of the EV 106 being charged. Usually, the battery capacity and voltage requirement of an EV 106 varies depending upon the EV range, that is, the distance which the EV 106 can cover in one full battery charge. For example, low range vehicles have a battery voltage of about 150V, whereas high range or heavy vehicles like E-trucks and E-Buses have a battery voltage of about 1000V. Therefore, for charging various types of EVs 106, the DC output voltage of the DC charger 100 should have a wide range from about 150V to about 1500V while ensuring delivery of high power over the whole range.

If constant high-power requirement is maintained over the wide range of an output voltage, then the current rating of the isolated DC-DC converter 102C is high at low voltages and reduces with the increase in the output voltage requirement. This calls for a re-design of the isolated DC-DC converter 102C with high voltage and high current rating. However, this increases the costs. One of the existing solutions to this problem is to employ two or more than two low voltage and low current isolated DC-DC converters 102C and connect them in parallel at a low voltage range and connect them in series at a high voltage range. In the parallel operation, the output currents get added increasing the current rating and in the series operation voltage outputs get added which fulfil the high voltage requirement. Conventional solutions achieve this change between series and parallel connection by employing mechanical contactors or physically changing the output connection. However, physically changing connection is not preferable for continuously charging different vehicles as it is cumbersome. Moreover, the mechanical contactors are slower in operation and require large space. Also, the online changeover from series to parallel and parallel to series is difficult to achieve.

An obvious solution to aforementioned problem is to replace the mechanical contactor with semiconductor-controlled switches. However, this requires at least three controlled semiconductor switches thereby, increasing the costs.

Moreover, the charging systems employed in the charging infrastructure for EVs such as the aforementioned DC charger, must comply with various standards and interfaces to control the EV charging processes. The standards include, for example, the Combined Charging System (CCS) standard that enables DC and AC charging, and the Charge de Move (CHAdeMO) standard that is purely a DC charging standard. To fulfil the requirement of the CHAdeMO standard, as shown in FIG 1, an extra diode 102D is required to be placed at the output of the isolated DC-DC converter 102C.

Document CN 108 718 156 A discloses in figs. 1, 2, 3, 6 and 7 (and respective description) a power converter, comprising two or more isolated DC-DC converters 1, 2, **..** , 2N and an N-stage series-parallel switching circuit, which is composed of 1 to N-stage series-parallel switching unit cascade connection. The series-parallel switching unit includes two input ports (input port 1 and input port 2) and an output port, and the series-parallel switching unit is composed of a first auxiliary switching tube Sa1, a first auxiliary diode Da1, and a second auxiliary diode Da2.

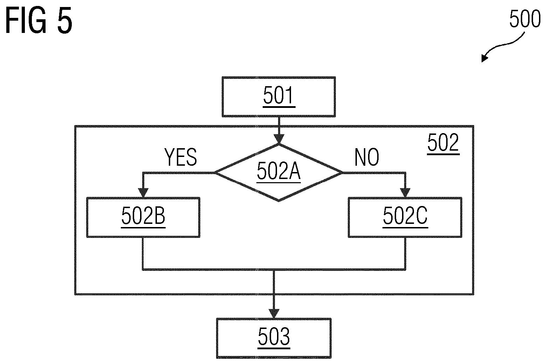

Document LU YANJUN ET AL: "Ultra-Wide Output Voltage Range Power Supply Based on Modular Switched-Converter Principle", IEEE TRANSACTIONS ON POWER ELECTRONICS, INSTITUTE OF ELECTRICAL AND ELECTRONICS ENGINEERS, USA, 1 January 2020, pages 94-106, describes in figs. 5 and 9 (and the respective description) and the abstract a selective series or parallel connection with a changeover switch including power transistors and diodes.

Document CN 108 649 664 A discloses in figs. 1 to 9, the abstract and in the introduction of D3 a selective series or parallel connection with a changeover switch including power transistors and diodes. Said document also informs about the type of the electric vehicle being responsible for the charging range of said vehicle.

Document US 2020/139839 A1 describes in figs. 1 to 14 (respective description) and in paragraphs 56, 93 together with the abstract a charging assembly for charging at least one electrically chargeable storage device, in particular an electrically chargeable storage device for driving an electrical vehicle, including multiple isolated DC power outputs 14 (multiple isolated converters 15), at least one outlet for connection to the at least one electrically chargeable storage device, at least one switching assembly 18 for connecting the multiple isolated DC power outputs 14 (multiple isolated converters 15) to the at least one outlet for connection to the at least one electrically chargeable storage device, whereby the switching assembly 18 is adapted to connect at least two of the multiple isolated DC power outputs 14 (multiple isolated converters 15) in series and/or in parallel to the at least one outlet.

Document US 2005/270812 A1 provides background details on series/parallel operation of the DC-DC converters, e.g. in figs. 2 and 9 together with paragraph 85 and the corresponding description of said document.

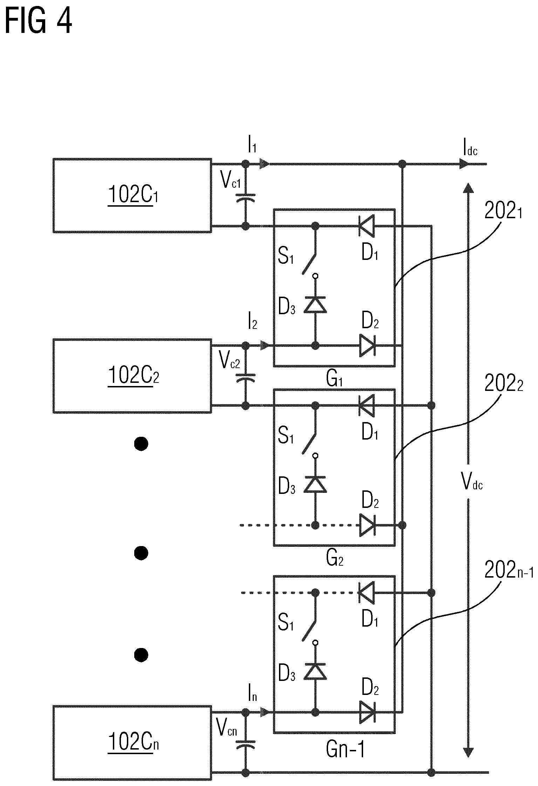

Document EP 3 333 005 A1 provides background details on series/parallel operation of the DC-DC converters, e.g. in figs. 4 a-c, 5-13 and the corresponding description in combination with paragraphs 6 and 12 of said document.

Document CN 106 646 466 B teaches to use a power transistor in series with a diode.

Document CN 101 442 269 teaches selecting series or parallel connection directly according to the speed and voltage requirements of a traction machine.

A configurable power converter, having two or more isolated DC-DC converters, should be capable of selectively delivering power in a low-voltage high-current mode or a high-voltage low-current mode over a wide range without increasing costs and design complexity associated therewith.

Moreover, it is an object of the present disclosure to provide a charging device and a method employing aforementioned configurable power converter for transferring power to an electric vehicle from a power grid while complying to various charging standards.

The object is met by the features of device claim 1 and corresponding method claim 2.

The configurable power converter comprises configuration selection module(s), each configuration selection module electrically couples two isolated DC-DC converters either in a series configuration or a parallel configuration.

The configurable power converter comprises an AC-DC converter, for example, a 3 phase AC to DC converter generating a DC voltage V1 from an AC voltage Vacgrid received from an AC power grid. According to this aspect of the present disclosure, the configurable power converter comprises an input filter filtering the AC voltage Vacgrid prior to the AC-DC conversion. The DC voltage V1 is then fed to the two or more isolated DC-DC converters of the configurable power converter.

The configurable power converter receives a DC voltage Vdcgrid from a DC power grid as the DC voltage V1. According to this aspect of the present disclosure, the DC voltage Vdcgrid is fed to the isolated DC-DC converters without requirement of an AC-DC conversion.

The isolated DC-DC converter comprises a first stage, a second stage, and an intermediary stage electrically coupling the first stage to the second stage. The first stage converts the DC voltage V1 into a high frequency AC voltage V1ac, that is, at the first stage, a DC voltage V1 is converted to a high frequency AC voltage of amplitude V1. According to this aspect, the first stage comprises a capacitor connected across the output of the 3-phase AC-DC converter, across which the DC voltage V1 appears. The first stage and the second stage each include four power conversion switches. According to this aspect, the second stage converts a high frequency AC voltage V2ac having an amplitude V2 into the DC voltage Vc equal to V2. According to this aspect, the second stage also comprises a capacitor across which the DC voltage Vc appears. These two stages, that is the first stage and the second stage, are coupled by an intermediary stage providing high frequency isolation therebetween. The intermediary stage includes a high frequency two-winding or a multi-winding transformer connected between the first stage and the second stage having a turns ratio of V1:V2.

Each of the configuration selection modules is connected to two of the isolated DC-DC converters. Thus, n isolated DC-DC converters may be divided into n/2 groups, each group having one configuration selection module therein enabling series or parallel connection of the two isolated DC-DC converters. Advantageously, these n/2 groups may in turn be connected in series or parallel based on the output voltage that the configurable power converter is required to generate, for example as per a type of the electric vehicle to be charged.

Each configuration selection module includes a configuration selection switch and diodes electrically coupled to the isolated DC-DC converters. The configuration selection switch may be a uni-directional switch or a bi-directional switch such as a four-quadrant switch. As used herein, the term "switch" refers to a switching device capable of connecting and disconnecting two electrical nodes realized, for example, using an Insulated-Gate Bipolar Transistor (IGBT), a Metal-Oxide-Semiconductor Field-Effect Transistor (MOSFET), thyristors, diodes, variable resistances or using any other devices of this class apparent to a person skilled in the art. The configuration selection switch may be realized using a series or a parallel connection of one or more individual switches with help of a common gating logic pulse that would meet the voltage and current requirements of the configurable power converter.

When the configuration selection switch is in a closed state, that is turned ON, the isolated DC-DC converters connected thereto, are connected in a series configuration. Advantageously, an output voltage Vdc of the configurable power converter in this case, is an integral multiple of an output voltage Vc of each of the isolated DC-DC converters, for example based on the number of groups or pairs of the isolated DC-DC converters present in the configurable power converter. For example, when a single group of two isolated DC-DC converters is present, the output DC voltage Vdc is 2Vc and the output current Idc remains constant, that is same as the current Ic flowing out of each of the isolated DC-DC converters.

When the configuration selection switch is in an open state, that is turned OFF, the isolated DC-DC converters connected thereto, are connected in a parallel configuration. Advantageously, an output current Idc of the configurable power converter in this case, is an integral multiple of an output voltage Ic of each of the isolated DC-DC converters, for example based on the number of groups or pairs of the isolated DC-DC converters present in the configurable power converter. For example, when a single group of two isolated DC-DC converters is present, the output DC current Idc is 2Ic and the output voltage Vdc remains constant, that is same as the voltage Vc appearing at outputs of each of the isolated DC-DC converters.

Advantageously, multiple such permutations and combinations of series or parallel configurations between the two isolated DC-DC converters of a group and between the groups themselves are possible.

The configurable power converter includes three diodes that are electrically coupled to the configuration selection switch such that at least one of the diodes is forward biased when the configuration selection switch is in a closed state and when the configuration selection switch is in an open state. Having one such diode forward biased irrespective of the position of the configuration selection switch, that is ON or OFF, enables the configurable power converter when employed in a charging device to comply with the CHAdeMO standard, in that the transfer of power that is the voltage and current must happen in one direction from the charging device to the electric vehicle connected thereto.

It would be appreciated by a person skilled in the art that multiple such configurable power converters may be connected together and employed to provide a multi-terminal DC output.

Disclosed herein is a charging device for transferring power to an electric vehicle (EV) from a power grid. The charging device comprises the aforementioned configurable power converter, a grid-side module, and a vehicle-side module. The grid-side module is capable of receiving an AC voltage Vacgrid from an AC power grid or a DC voltage Vdcgrid from a DC power grid and/or an energy storage system such as a battery pack and transferring the AC voltage Vacgrid or the DC voltage Vdcgrid to the configurable power converter. The vehicle-side module electrically coupled to the grid-side module via the configurable power converter, is capable of delivering the DC voltage Vdc to the EV connected to the charging device.

The charging device disclosed herein, is advantageously a DC fast charger capable of charging a wide range of EVs including, for example, light motor vehicles such as cars and heavy duty EVs such as trucks, buses, etc., by selecting a suitable number of the isolated DC-DC converters in the configurable power converter and by operating the configuration selection switch to select a suitable configuration that is, series or parallel of the isolated DC-DC converters in the configurable power converter.

Also, disclosed herein is a method for transferring power to an electric vehicle (EV) from a power grid using the aforementioned charging device. The method comprises detecting physical connection of the EV to the vehicle-side module of the charging device, and selectively operating the configuration selection switch of the configurable power converter of the charging device to assume a closed state or an open state, based on a voltage requirement of the EV.

The configuration selection switch when in the closed state connects the isolated DC-DC converters of the configurable power converter in a series configuration. Thus, the configuration selection switch, when in the closed state enables the configurable power converter to generate the DC voltage Vdc having the amplitude 2Vc.

The configuration selection switch when in the open state connects the isolated DC-DC converters of the configurable power converter in a parallel configuration. Thus, the configuration selection switch when in an open state enables the configurable power converter to generate the DC current Idc having the amplitude 2Ic.

The method includes selectively positioning the configuration selection switch between the open state and the closed state based on a voltage requirement of a battery of the EV, for example, light-duty or a heavy-duty EV. The method further includes providing the DC voltage Vdc to the EV via the vehicle-side module of the charging device for charging the electric vehicle.

The method determines a DC voltage Vdc required for charging the EV, for example, based on a make and a type of the vehicle such as a heavy-duty truck or a light motor vehicle, etc., and then selectively operating the configuration selection switch, that is, between an open state and a closed state, and charging the EV with the DC voltage Vdc generated by the configurable power converter.

This operation of the configuration selection switch is performed, for example, by a user operating the charging device. According to another aspect, the charging device is pre-set for a particular mode of the configuration selection switch by a user operating the charging device. According to yet another aspect, the method dynamically and automatically switches the configuration selection switch without user interference, for example via a controller module electrically coupled to the configurable power converter of the charging device, having one or more controllers.

The above mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:

FIG 1    illustrates a block diagram of a DC charger employed in charging of Electric Vehicles (EVs), according to state of the art;

FIG 2A    illustrates a block diagram of a DC charger employed in charging of Electric Vehicles (EVs) having a configurable power converter, according to an embodiment of the present disclosure;

FIG 2B    illustrates an electrical circuit diagram of the configurable power converter shown in FIG 2A having a configuration selection module, according to an embodiment of the present disclosure;

FIG 3A    illustrates an electrical circuit diagram of the configurable power converter shown in FIGS 2A-2B when a configuration selection switch of the configuration selection module is opened, according to an embodiment of the present disclosure;

FIG 3B    illustrates an electrical circuit diagram of the configurable power converter shown in FIGS 2A-2B when a configuration selection switch of the configuration selection module is closed, according to an embodiment of the present disclosure;

FIG 4    illustrates an electrical circuit diagram of the configurable power converter shown in FIGS 2A-2B with a plurality of isolated DC-DC converters employed therein, according to an embodiment of the present disclosure; and

FIG 5    illustrates a process flow chart of a method for transferring power to an electric vehicle from a power grid via a charging device employing the configurable power converter shown in FIGS 2A-2B, according to an embodiment of the present disclosure.

Various embodiments are described with reference to the drawings, wherein like reference numerals are used to refer like elements throughout. In the following description, for the purpose of explanation, numerous specific details are set forth in order to provide thorough understanding of one or more embodiments. It may be evident that such embodiments may be practiced without these specific details.

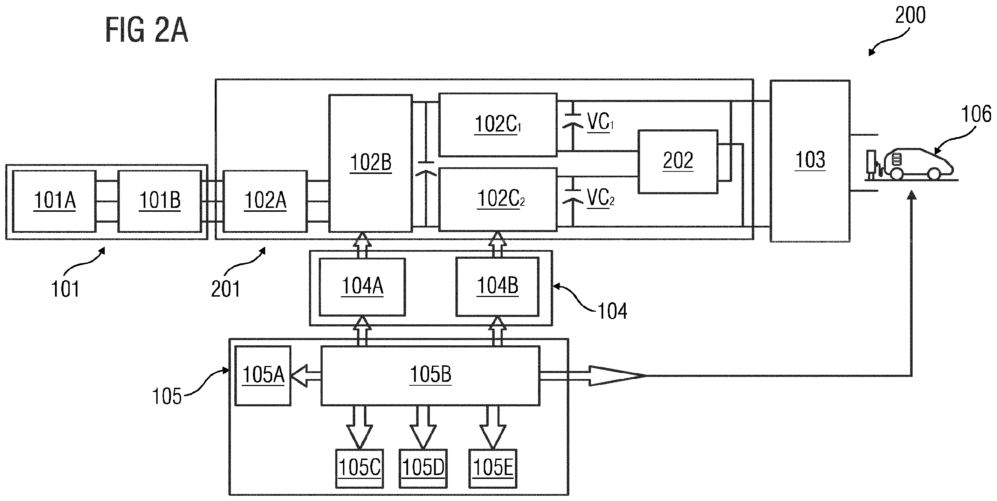

FIG 2A illustrates a block diagram of a DC charger 200, also referred to as a charging device 200, employed in charging of Electric Vehicles (EVs) 106 having a configurable power converter 201, according to an embodiment of the present disclosure. The DC charger 200 includes a grid-side module 101, the configurable power converter 201, and a vehicle-side module 103 electrically coupled to one another as shown in FIG 2A. The grid-side module 101 has a 3-phase AC voltage supply Vacgrid represented by 101A coming from the power grid and a protection unit 101B electrically coupled to the 3-phase AC voltage supply 101A. The grid-side module 101 acts as an interface between the configurable power converter 201 and the power grid for receiving AC voltage Vacgrid from the power grid.

The configurable power converter 201 has an input filter 102A, a 3-phase AC to DC converter 102B such as a 3-phase pulse width modulation (PWM) converter and two or more isolated DC-DC converters $102C_1$-$102C_2$, electrically coupled with one another. The configurable power converter 201 has a configuration selection module 202 connecting the two or more isolated DC-DC converters $102C_1$-$102C_2$. The vehicle-side module 103 is a protection unit capable of delivering a DC voltage Vdc to an EV 106. The DC charger 200 also includes a controller module 104 having one or more controllers 104A, 104B. The controller module 104 is electrically coupled with the configurable power converter 201 for controlling the 3-phase pulse width modulation (PWM) converter 102B and the isolated DC-DC converters $102C_1$-$102C_2$.

The DC charger 200 also includes a software module 105 having a user interface 105A such as a human machine interface (HMI) electrically coupled with a communication controller module 105B which in turn communicates with portable electronic devices 105C such as cell phones, a cloud communication network 105D and/or a user device 105E operated by the power grid 101A. The communication controller module 105B also communicates with the EV 106.

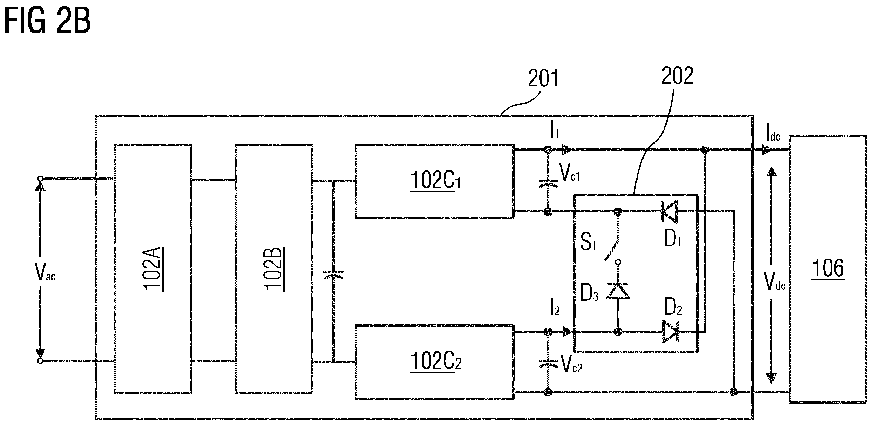

FIG 2B illustrates an electrical circuit diagram of the configurable power converter 201 shown in FIG 2A having a configuration selection module 202, according to an embodiment of the present disclosure. The configuration selection module 202 includes a configuration selection switch S1, that is, a controlled semiconductor switch S1 and three diodes D1, D2, and D3. The configuration selection switch S1 can be realized using an Insulated-Gate Bipolar Transistor (IGBT), a Metal-Oxide-Semiconductor Field-Effect Transistor (MOSFET), thyristors, and/or using other devices of this class. The configuration selection module 202 has the aforementioned components S1, D1, D2, and D3 arranged such that at least one diode D1, D2, and/or D3 is in an output path of the configurable power converter 201. This ensures compliance with the requirements posed by the CHAdeMO standard.

The operation of the configuration selection switch S1 defines whether the isolated DC-DC converters

$102C_1$-$102C_2$ are connected in series or parallel with one another. The operation of the configuration selection switch S1 is performed based on a type of the EV 106 connected to the DC charger 200 shown in FIG 2A. For example, when a heavy duty EV 106 such as a bus or a truck having high voltage requirement is connected, then the configuration selection switch S1 is turned ON, that is closed, so as to allow the isolated DC-DC converters $102C_1$-$102C_2$ to be connected in a series configuration thereby, allowing a higher voltage to be delivered to the EV 106. Whereas, when a EV 106 such as a light motor vehicle having a lower voltage requirement is connected to the DC charger 200, then the configuration selection switch S1 is turned OFF, that is opened, to allow the isolated DC-DC converters $102C_1$-$102C_2$ to be connected in a parallel configuration thereby, allowing a lower voltage to be delivered to the EV 106.

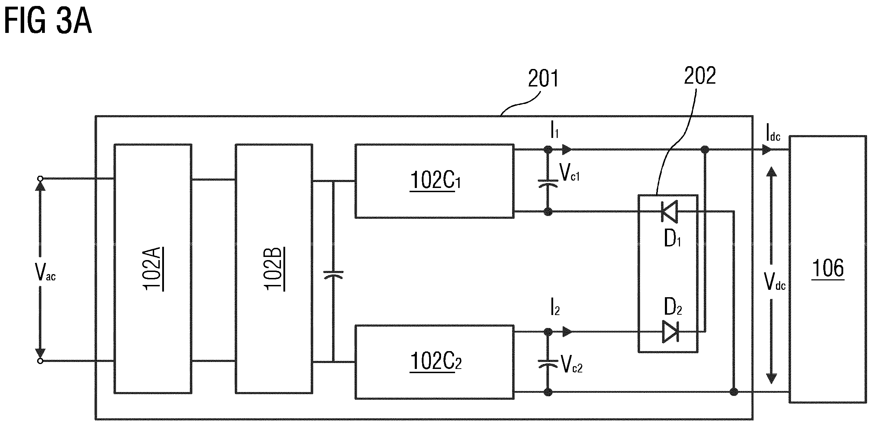

FIG 3A illustrates an electrical circuit diagram of the configurable power converter 201 shown in FIGS 2A-2B when a configuration selection switch S1 of the configuration selection module 202 is opened, according to an embodiment of the present disclosure. When the configuration selection switch S1 is opened, that is, turned OFF, the diodes D1 and D2 are forward biased due to output voltages VC1 and VC2, of the isolated DC-DC converters $102C_1$-$102C_2$ respectively, appearing across them respectively. Upon forward biasing of the diodes D1 and D2, the isolated DC-DC converters $102C_1$- $102C_2$ get connected in parallel with one another as shown in FIG 3A. The output voltage Vdc of the configurable power converter 201, in this case becomes equal to the voltages VC1 or VC2, represented as:

$$V_{dc} = V_{c1} = V_{c2}$$

Whereas the output current Idc becomes equal to addition of output currents I1 and I2 of isolated DC-DC converters $102C_1$- $102C_2$, represented as:

$$I_{dc} = I_1 + I_2$$

Hence, in this case, the output voltage Vdc is lower and output current Idc is higher. Moreover, as the diodes D1 and D2 come in the output path of configurable power converter 201, the requirements of the CHAdeMO standard are complied with.

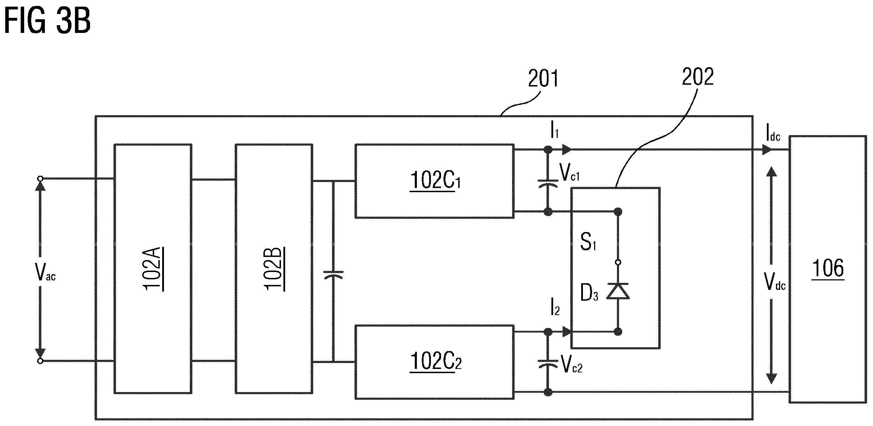

FIG 3B illustrates an electrical circuit diagram of the configurable power converter 201 shown in FIGS 2A-2B when a configuration selection switch S1 of the configuration selection module 202 is closed, according to an embodiment of the present disclosure. When the configuration selection switch S1 is closed, that is, turned ON, the diodes D1 and D2 are reverse biased while the diode D3 connected in series with the configuration selection switch S1 gets forward biased. Upon forward biasing of the diode D3, the isolated DC-DC converters $102C_1$-$102C_2$ get connected in series with one another as shown in FIG 3B. The output voltage Vdc of the configurable power converter 201, in this case becomes equal to addition of the voltages VC1 and VC2 appearing across outputs of the isolated DC-DC converters $102C_1$-$102C_2$, represented as:

$$V_{dc} = V_{c1} + V_{c2}$$

Whereas the output current Idc now becomes equal to the output currents I1 or I2 of isolated DC-DC converters $102C_1$- $102C_2$, represented as:

$$I_{dc} = I_1 = I_2$$

Hence, in this case, the output voltage Vdc is higher and output current Idc is lower. Moreover, as the diode D3 comes in the output path of configurable power converter 201, the requirements of the CHAdeMO standard are complied with.

FIG 4 illustrates a plurality of isolated DC-DC converters $102C_1$-$102C_n$ employable in the configurable power converter 201 shown in FIGS 2A-2B, according to an embodiment of the present disclosure. Each of the isolated DC-DC converters $102C_1$-$102C_n$ are connected to one another via n-1 configuration selection modules $202_1$ to $202_{n-1}$. For connecting the isolated DC-DC converters $102C_1$-$102C_n$ in parallel, the configuration selection switch S1 of all the configuration selection modules $202_1$ to $202_{n-1}$ is turned OFF, that is opened. Similarly, for connecting the isolated DC-DC converters $102C_1$-$102C_n$ in series, the configuration selection switch S1 of all the configuration selection modules $202_1$ to $202_{n-1}$ is turned ON, that is closed.

Here, when all the isolated DC-DC converters $102C_1$-$102C_n$ are connected in parallel, the output voltage Vdc and the output current Idc are represented as:

$$V_{dc} = V_{c1} = V_{c2} = \cdots V_{cn}$$

and

$$I_{dc} = I_{c1} + I_{c2} + \cdots I_{cn}$$

On the other hand, when all the isolated DC-DC converters $102C_1$-$102C_n$ are connected in series, the output voltage Vdc and the output current Idc are represented as:

$$V_{dc} = V_{c1} + V_{c2} + \cdots V_{cn}$$

and

$$I_{dc} = I_{c1} = I_{c2} = \cdots I_{cn}$$

Moreover, some of the isolated DC-DC converters $102C_1$-$102C_n$ may be connected in series while some in parallel. Assuming from the n number of the isolated DC-DC converters $102C_1$-$102C_n$, n/2 groups are formed, each group having two isolated DC-DC converters $102C_1$-$102C_2$ therein connected in series. Each of these n/2 groups in turn can be either connected in series or parallel with one another. Therefore, when these n/2 groups are connected in parallel, wherein each of the groups is having two isolated DC-DC converters $102C_1$-$102C_2$ connected in series, then the output voltage Vdc and the output current Idc are represented as:

$$V_{dc} = V_{c1} + V_{c2} = V_{c3} + V_{c4} = \dots V_{cn-1} + V_{cn}$$

and

$$I_{dc} = (I_{c1} = I_{c2}) + (I_{c3} = I_{c4}) + \cdots (I_{cn-1} = I_{cn})$$

Thus, the output voltage Vdc is approximately equal to 2Vc assuming the output voltages $V_{C1}$-$V_{cn}$ are equal and the output current Idc is approximately equal to $nI_C/2$ assuming the output currents $I_{C1}$-$I_{Cn}$ are equal.
Similarly, assuming from the n number of the isolated DC-DC converters $102C_1$-$102C_n$, n/2 groups are formed, each group having two isolated DC-DC converters $102C_1$-$102C_2$ therein connected in parallel. Each of these n/2 groups in turn can be either connected in series or parallel with one another. Therefore, when these n/2 groups are connected in series wherein each of the groups is having two isolated DC-DC converters $102C_1$-$102C_2$ connected in parallel, then the output voltage Vdc and the output current Idc are represented as:

$$V_{dc} = (V_{c1} = V_{c2}) + (V_{c3} = V_{c4}) = \dots (V_{cn-1} = V_{cn})$$

and

$$I_{dc} = (I_{c1} + I_{c2}) = (I_{c3} + I_{c4}) = \cdots (I_{cn-1} + I_{cn})$$

Thus, the output voltage Vdc is approximately equal to nVc/2 assuming the output voltages $V_{C1}$-$V_{cn}$ are equal and the output current Idc is approximately equal to $2I_C$ assuming the output currents $I_{C1}$-$I_{cn}$ are equal.
Therefore, by connecting n/2 groups of the isolated DC-DC converters $102C_1$-$102C_n$ in series or in parallel, wherein each of the groups is having two isolated DC-DC converters $102C_1$-$102C_2$ connected in series or in parallel, it is possible to obtain integrals of the output current Idc as Ic, 2Ic, 3Vc,... nVc and the output voltage Vdc as Vc, 2Vc, 3Vc,... nVc.
FIG 5 illustrates a process flow chart of a method 500 for transferring power to an electric vehicle (EV) 106 from a power grid via a charging device 200 employing the configurable power converter 201 shown in FIGS 2A-2B, according to an embodiment of the present disclosure. At step 501, the method detects physical connection of the EV 106 to the vehicle-side module 103 of the charging device 200. At step 502, the method selectively operates the configuration selection module 202 of the configurable power converter 201 in one of an output voltage amplification mode or an output voltage maintenance mode based on a voltage requirement of the EV 106. At step 502A, the method determines the voltage requirement of the EV 106 connected to the charging device 200. If the voltage requirement is for a heavy-duty EV 106, then the method at step 502B switches the configuration selection switch S1 of the configuration selection module 202 of the configurable power converter 201 in a closed state so as to connect the isolated DC-DC converters $102C_1$-$102C_2$ of the configurable power converter 201 in series so as to allow an output voltage Vdc approximately equal to 2Vc to be transferred to the EV 106. If the voltage requirement is not for a heavy-duty EV 106, then the method at step 502C switches the configuration selection switch S1 to an open state so as to connect the isolated DC-DC converters $102C_1$-$102C_2$ of the configurable power converter 201 in parallel so as to allow an output voltage Vdc approximately equal to Vc to be transferred to the EV 106. The method thus, includes selectively positioning the configuration selection switch S1 between the open state and the closed state based on a voltage requirement of a battery of the EV 106 connected to the charging device 200. At step 503, the method further includes providing the DC voltage Vdc to the EV 106 via the vehicle-side module 103 of the charging device 200 for charging the EV 106.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope.

**Claims**

1. A charging device (200) for transferring power to an electric vehicle (106) from a power grid, wherein the charging device (200) comprises:

    a configurable power converter (201) capable of generating an output voltage (Vdc);
    a grid-side module (101) electrically coupled to the configurable power converter (201) and capable of receiving one of an AC voltage (Vacgrid) and a DC voltage (Vdcgrid) from the power grid and transferring the AC voltage (Vacgrid) and the DC voltage (Vdcgrid) to the configurable power converter (201); and
    a vehicle-side module (103) capable of delivering the output voltage (Vdc) to the electric vehicle (106) when connected to the charging device (200), wherein the vehicle-side module (103) is electrically coupled to the grid-side module (101) via the configurable power converter (200B),
    **characterized in that**
    the configurable power converter (201), comprises:

        n isolated DC-DC converters ($102C_1$-$102C_n$), n being greater or equal 2;
        n-1 configuration selection modules ($202_1$-$202_{n-1}$),
        each configuration selection module ($202_1$-$202_{n-1}$) comprising:

            a configuration selection switch (S1); and
            first, second and third diodes (D1-D3) electrically coupled to the isolated DC-DC converters ($102C_1$-$102C_n$), the three diodes (D1-D3) being arranged such that at least one diode is in an output path of the configurable power converter (201), wherein each configuration selection module ($202_1$-$202_{n-1}$) is configured to electrically couple two of the isolated DC-DC converters ($102C_1$-$102C_n$) in one of a series configuration at a high voltage range and a parallel configuration at a low voltage range, dependent on a type of electric vehicle (106), connected to a charging device (200), wherein, when a heavy duty electric vehicle (106) having high voltage requirement is connected to the charging device (200), the n isolated DC-DC converters ($102C_1$-$102C_n$) are electrically coupled in series configuration,
            wherein when a light motor electric vehicle (106) having a lower voltage requirement is connected to the charging device (200), the n isolated DC-DC converters ($102C_1$-$102C_n$) are electrically coupled in parallel configuration, and
            wherein each configuration selection module ($202_1$-$202_n$) is connected to two of the isolated DC-DC converters ($102C_1$-$102C_n$) so that the n isolated DC-DC converters ($102C_1$-$102C_n$) are divided into n/2 groups, each group having one configuration selection module ($202_1$-$202_{n-1}$) therein, enabling series or parallel connection of the two isolated DC-DC converters ($102C_1$-$102C_n$),
            wherein, when the configuration selection switch (S1) of the configuration selection module ($202_1$-$202_{n-1}$) is opened, that is, turned OFF, the first and second diodes (D1, D2) are forward biased due to output voltages (VC1, VC2) of the two isolated DC-DC converters ($102C_1$-$102C_2$) respectively,

appearing across them respectively, wherein the forward biasing of the first and second diodes (D1, D2) is configured to get the twc isolated DC-DC converters ($102C_1$-$102C_2$) connected in parallel with one another, wherein an output voltage (Vdc) of the configurable power converter (201) is the output voltage (Vc) of any of the isolated DC-DC converters ($102C_1$-$102C_n$) and the output current (Idc) of the configurable power converter (201) becomes equal to addition of output currents (I1, I2) of two isolated DC-DC converters ($102C_1$-$102C_2$), wherein, when the configuration selection switch (S1) is closed, that is, turned ON, the first and second diodes (D1, D2) are reverse biased while the third diode (D3) connected in series with the configuration selection switch (S1) gets forward biased, wherein the forward biasing of the third diode D3 is configured to get the two isolated DC-DC converters ($102C_1$-$102C_2$) connected in series with one another, wherein an output voltage (Vdc) of the configurable power converter (201) becomes equal to addition of the output voltages (Vc) of the two isolated DC-DC converters ($102C_1$-$102C_2$)

and the output current (Idc) of the configurable power converter (201) is the output voltage (Vc) of any of the output current (I1, I2) of any of two isolated DC-DC converters ($102C_1$-$102C_2$),

and wherein said n/2 groups are in turn connectable in series or parallel based on the output voltage that the power converter (201) is required to generate, dependent on said type of electric vehicle (106).

2. A method (600) for transferring power to an electric vehicle (106) from a power grid using the charging device (200) according claim 1, comprising:

detecting (501) a physical connection of the electric vehicle (106) to the vehicle-side module (103) of the charging device (200); and

selectively operating (502) a configuration selection switch (S1) of a configurable power converter (201) of the charging device (200A) to assume one of a closed state and an open state, based on a voltage requirement of the electrical vehicle (106),

wherein, when the configuration selection switch (S1) of the configuration selection module ($202_1$-$202_{n-1}$) is opened, that is, turned OFF, the first and second diodes (D1, D2) are forward biased due to output voltages (VC1, VC2) of the two isolated DC-DC converters ($102C_1$-$102C_2$) respectively, appearing across them respectively, wherein the forward biasing of the first and second diodes (D1, D2) get the two isolated DC-DC converters ($102C_1$-$102C_2$) connected in parallel with one another, wherein an output voltage (Vdc) of the configurable power converter (201) is the output voltage (Vc) of any of the isolated DC-DC converters ($102C_1$-$102C_n$) and the output current (Idc) of the configurable power converter (201) becomes equal to addition of output currents (I1, I2) of two isolated DC-DC converters ($102C_1$-$102C_2$),

wherein, when the configuration selection switch (S1) is closed, that is, turned ON, the first and second diodes (D1, D2) are reverse biased while the third diode (D3) connected in series with the configuration selection switch (S1) gets forward biased, wherein the forward biasing of the third diode D3 get the two isolated DC-DC converters ($102C_1$-$102C_2$) connected in series with one another, wherein an output voltage (Vdc) of the configurable power converter (201) becomes equal to addition of the output voltages (Vc) of the two isolated DC-DC converters ($102C_1$-$102C_2$) and the output current (Idc) of the configurable power converter (201) is the output voltage (Vc) of any of the output current (I1, I2) of any of two isolated DC-DC converters ($102C_1$-$102C_2$), and wherein said n/2 groups are in turn connectable in series or parallel based on the output voltage that the power converter (201) is required to generate, dependent on said type of electric vehicle (106).

**Patentansprüche**

1. Ladevorrichtung (200) zum Übertragen von Strom an ein Elektrofahrzeug (106) von einem Stromnetz, wobei die Ladevorrichtung (200) umfasst:

einen konfigurierbaren Stromwandler (201), der in der Lage ist, eine Ausgangsspannung (Vdc) zu erzeugen;
ein netzseitiges Modul (101), das elektrisch mit dem konfigurierbaren Stromwandler (201) gekoppelt ist und in der Lage ist, eine Wechselspannung (Vacgrid) oder eine Gleichspannung (Vdcgrid) aus dem Stromnetz zu empfangen und die Wechselspannung (Vacgrid) und die Gleichspannung (Vdcgrid) an den konfigurierbaren Stromwandler (201) zu übertragen; und
ein fahrzeugseitiges Modul (103), das in der Lage ist, die Ausgangsspannung (Vdc) an das Elektrofahrzeug (106) zu liefern, wenn es mit der Ladevorrichtung (200) verbunden ist, wobei das fahrzeugseitige Modul (103) über den konfigurierbaren Stromwandler (200B) elektrisch mit dem netzseitigen Modul (101) gekoppelt ist,
**dadurch gekennzeichnet, dass**

der konfigurierbare Stromwandler (201) umfasst:

n isolierte DC/DC-Wandler ($102C_1$-$102C_n$), wobei n größer oder gleich 2 ist;
n-1 Konfigurationsauswahlmodule ($202_1$-$202_{n-1}$), wobei jedes Konfigurationsauswahlmodul ($202_1$-$202_{n-1}$) umfasst:

einen Konfigurationsauswahlschalter (S1); und
eine erste, zweite und dritte Diode (D1-D3), die elektrisch mit den isolierten DC-DC-Wandlern ($102C_1$-$102C_n$) gekoppelt sind, wobei die drei Dioden (D1-D3) so angeordnet sind, dass sich mindestens eine Diode in einem Ausgangspfad des konfigurierbaren Stromwandlers (201) befindet, wobei jedes Konfigurationsauswahlmodul ($202_1$-$202_{n-1}$) dazu ausgelegt ist, zwei der isolierten DC-DC-Wandler ($102C_1$-$102C_n$) abhängig von einem Typ eines Elektrofahrzeugs (106), das mit einer Ladevorrichtung (200) verbunden ist, elektrisch in einer von einer Reihenschaltung in einem Hochspannungsbereich und einer Parallelschaltung in einem Niederspannungsbereich zu koppeln, wobei, wenn ein schweres Elektrofahrzeug (106) mit hohem Spannungsbedarf mit der Ladevorrichtung (200) verbunden ist, die n isolierten DC-DC-Wandler ($102C_1$-$102C_n$) elektrisch in Reihenschaltung gekoppelt sind,
wobei, wenn ein leichtes Elektrofahrzeug (106) mit einer niedrigeren Spannungsanforderung mit der Ladevorrichtung (200) verbunden ist, die n isolierten DC-DC-Wandler ($102C_1$-$102C_n$) elektrisch in einer Parallelschaltung gekoppelt sind, und
wobei jedes Konfigurationsauswahlmodul ($202_1$-$202_n$) mit zwei der isolierten DC-DC-Wandler ($102C_1$-$102C_n$) verbunden ist, so dass die n isolierten DC-DC-Wandler ($102C_1$-$102C_n$) in n/2 Gruppen unterteilt sind, wobei jede Gruppe ein Konfigurationsauswahlmodul ($202_1$-$202_{n-1}$) darin aufweist, wodurch eine Reihenschaltung oder Parallelschaltung der zwei isolierten DC-DC-Wandler ($102C_1$-$102C_n$) ermöglicht wird,
wobei, wenn der Konfigurationsauswahlschalter (S1) des Konfigurationsauswahlmoduls ($202_1$-$202_{n-1}$) geöffnet ist, das heißt ausgeschaltet ist, die erste und die zweite Diode (D1, D2) jeweils aufgrund von Ausgangsspannungen (VC1, VC2) der zwei isolierten DC-DC-Wandler ($102C_1$-$102C_2$), die jeweils an ihnen anliegen, in Durchlassrichtung vorgespannt sind, wobei die Vorspannung in Durchlassrichtung der ersten und der zweiten Diode (D1, D2) dazu ausgelegt ist, die zwei isolierten DC-DC-Wandler ($102C_1$-$102C_2$) parallel zueinander zu schalten, wobei eine Ausgangsspannung (Vdc) des konfigurierbaren Stromwandlers (201) die Ausgangsspannung (Vc) eines beliebigen der isolierten DC-DC-Wandler ($102C_1$-$102C_n$) ist und der Ausgangsstrom (Idc) des konfigurierbaren Stromwandlers (201) gleich der Summe der Ausgangsströme (I1, I2) der zwei isolierten DC-DC-Wandler ($102C_1$-$102C_2$) wird,
wobei, wenn der Konfigurationsauswahlschalter (S1) geschlossen ist, das heißt eingeschaltet ist, die erste und die zweite Diode (D1, D2) in Sperrrichtung vorgespannt sind, während die dritte Diode (D3), die in Reihe mit dem Konfigurationsauswahlschalter (S1) geschaltet ist, in Durchlassrichtung vorgespannt wird,
wobei die Vorspannung in Durchlassrichtung der dritten Diode (D3) dazu ausgelegt ist, die zwei isolierten DC-DC-Wandler ($102C_1$-$102C_2$) in Reihe miteinander zu schalten, wobei eine Ausgangsspannung (Vdc) des konfigurierbaren Stromwandlers (201) gleich der Summe der Ausgangsspannungen (Vc) der zwei isolierten DC-DC-Wandler ($102C_1$-$102C_2$) wird und der Ausgangsstrom (Idc) des konfigurierbaren Stromwandlers (201) der Ausgangsstrom (I1, I2) eines beliebigen der zwei isolierten DC-DC-Wandler ($102C_1$-$102C_2$) ist, und wobei die n/2 Gruppen ihrerseits in Reihe oder parallel schaltbar sind, basierend auf der Ausgangsspannung, die der Stromwandler (201) erzeugen soll, abhängig von dem Typ des Elektrofahrzeugs (106).

2. Verfahren (600) zum Übertragen von Strom auf ein Elektrofahrzeug (106) aus einem Stromnetz unter Verwendung der Ladevorrichtung (200) nach Anspruch 1, umfassend:

Erfassen (501) einer physischen Verbindung des Elektrofahrzeugs (106) mit dem fahrzeugseitigen Modul (103) der Ladevorrichtung (200); und
selektives Betätigen (502) eines Konfigurationsauswahlschalters (S1) eines konfigurierbaren Stromwandlers (201) der Ladevorrichtung (200A), um einen von einem geschlossenen Zustand und einem offenen Zustand einzunehmen, basierend auf einem Spannungsbedarf des Elektrofahrzeugs (106),
wobei, wenn der Konfigurationsauswahlschalter (S1) des Konfigurationsauswahlmoduls ($202_1$-$202_{n-1}$) geöffnet ist, das heißt ausgeschaltet ist, die erste und die zweite Diode (D1, D2) jeweils aufgrund von Ausgangsspannungen (VC1, VC2) der zwei isolierten DC-DC-Wandler ($102C_1$-$102C_2$), die jeweils an ihnen anliegen, in Durchlassrichtung vorgespannt sind, wobei die Vorspannung in Durchlassrichtung der ersten und der zweiten Diode (D1, D2) dazu ausgelegt ist, die zwei isolierten DC-DC-Wandler ($102C_1$-$102C_2$) parallel zueinander zu schalten, wobei eine Ausgangsspannung (Vdc) des konfigurierbaren Stromwandlers (201) die Ausgangsspannung (Vc) eines beliebigen der isolierten DC-DC-Wandler ($102C_1$-$102C_n$) ist und der Ausgangsstrom (Idc) des konfigurierbaren Stromwandlers (201) gleich der Summe der Ausgangsströme (I1, I2) der zwei isolierten DC-DC-Wandler ($102C_1$-$102C_2$) wird,

wobei, wenn der Konfigurationsauswahlschalter (S1) geschlossen ist, das heißt eingeschaltet ist, die erste und die zweite Diode (D1, D2) in Sperrrichtung vorgespannt sind, während die dritte Diode (D3), die in Reihe mit dem Konfigurationsauswahlschalter (S1) geschaltet ist, in Durchlassrichtung vorgespannt wird,

wobei die Vorspannung in Durchlassrichtung der dritten Diode (D3) dazu ausgelegt ist, die zwei isolierten DC-DC-Wandler ($102C_1$-$102C_2$) in Reihe miteinander zu schalten, wobei eine Ausgangsspannung (Vdc) des konfigurierbaren Stromwandlers (201) gleich der Summe der Ausgangsspannungen (Vc) der zwei isolierten DC-DC-Wandler ($102C_1$-$102C_2$) wird und der Ausgangsstrom (Idc) des konfigurierbaren Stromwandlers (201) der Ausgangsstrom (I1, I2) eines beliebigen der zwei isolierten DC-DC-Wandler ($102C_1$-$102C_2$) ist, und wobei die n/2 Gruppen ihrerseits in Reihe oder parallel schaltbar sind, basierend auf der Ausgangsspannung, die der Stromwandler (201) erzeugen soll, abhängig von dem Typ des Elektrofahrzeugs (106).

**Revendications**

1. Dispositif de recharge (200) pour transférer de l'électricité à un véhicule électrique (106) depuis un réseau d'électricité, dans lequel le dispositif de recharge (200) comprend :

un convertisseur d'électricité configurable (201) capable de générer une tension de sortie (Vdc) ;
un module côté réseau (101) couplé électriquement au convertisseur d'électricité configurable (201) et capable de recevoir une d'une tension CA (Vacgrid) et d'une tension CC (Vdcgrid) en provenance du réseau d'électricité et de transférer la tension CA (Vacgrid) et la tension CC (Vdcgrid) au convertisseur d'électricité configurable (201) ; et
un module côté-véhicule (103) capable de fournir la tension de sortie (Vdc) au véhicule électrique (106) lorsqu'il est connecté au dispositif de recharge (200), dans lequel le module côté véhicule (103) est couplé électriquement au module côté réseau (101) par l'intermédiaire du convertisseur d'électricité configurable (200B),
**caractérisé en ce que**
le convertisseur d'électricité configurable (201), comprend :

n convertisseurs CC-CC isolés ($102C_1$-$102C_n$), n étant supérieur ou égal à 2 ;
n-1 modules de sélection de configuration ($202_1$-$202_{n-1}$), chaque module de sélection de configuration ($202_1$-$202_{n-1}$) comprenant :

un commutateur de sélection de configuration (S1) ; et
des première, deuxième, et troisième diodes (D1-D3) couplées électriquement aux convertisseurs CC-CC isolés ($102C_1$-$102C_n$), les trois diodes (D1-D3) étant agencées de manière telle qu'au moins une diode est dans un chemin de sortie du convertisseur d'électricité configurable (201), dans lequel chaque module de sélection de configuration ($202_1$-$202_{n-1}$) est configuré pour coupler électriquement deux des convertisseurs CC-CC isolés ($102C_1$-$102C_n$) en une d'une configuration en série à une plage haute tension et d'une configuration en parallèle à une plage basse tension, en fonction d'un type de véhicule électrique (106), connecté à un dispositif de recharge (200),
dans lequel, lorsqu'un véhicule électrique de poids lourd (106) ayant un besoin en haute tension est connecté au dispositif de recharge (200), les n convertisseurs CC-CC isolés ($102C_1$-$102C_n$) sont couplés électriquement en configuration en série,
dans lequel lorsqu'un véhicule électrique motorisé léger (106) ayant un besoin en plus basse tension est connecté au dispositif de recharge (200), les n convertisseurs CC-CC isolés ($102C_1$-$102C_n$) sont couplés électriquement en configuration en parallèle, et
dans lequel chaque module de sélection de configuration ($202_1$-$202_n$) est connecté à deux des convertisseurs CC-CC isolés ($102C_1$-$102C_n$) de telle sorte que les n convertisseurs CC-CC isolés ($102C_1$-$102C_n$) sont divisés en n/2 groupes, chaque groupe ayant un module de sélection de configuration ($202_1$-$202_{n-1}$) dans celui-ci, permettant la connexion en série ou en parallèle des deux convertisseurs CC-CC isolés ($102C_1$-$102C_n$),
dans lequel, lorsque le commutateur de sélection de configuration (S1) du module de sélection de configuration ($202_1$-$202_{n-1}$) est ouvert, à savoir, éteint, les première et deuxième diodes (D1, D2) sont polarisées en sens direct en raison de tensions de sortie (VC1, VC2) des deux convertisseurs CC-CC isolés ($102C_1$-$102C_2$) respectivement, apparaissant à travers celles-ci respectivement, dans lequel la polarisation en sens direct des première et deuxième diodes (D1, D2) est configurée pour avoir les deux convertisseurs CC-CC isolés ($102C_1$-$102C_2$) connectés en parallèle l'un à l'autre, dans lequel une tension de sortie (Vdc) du convertisseur d'électricité configurable (201) est la tension de sortie (Vc) de quelconques des convertisseurs CC-CC isolés ($102C_1$-$102C_n$) et le courant de sortie (Ide) du convertisseur d'électricité configurable (201) devient égal à une addition de courants de sortie (I1, I2) de deux convertisseurs CC-CC isolés ($102C_1$-$102C_2$), dans lequel, lorsque le commutateur de sélection de configuration (S1) est fermé, à savoir, allumé, les première et deuxième diodes (D1, D2) sont polarisées en sens inverse alors que la troisième diode (D3) connectée ensérie au commutateur de sélection de configuration (SI) devient polarisée en sens direct, dans lequel la polarisation en sens direct de la troisième diode D3 est configurée pour avoir les deux convertisseurs CC-CC isolés ($102C_1$-$102C_2$) connectés en série l'un à l'autre, dans lequel une tension de sortie (Vdc) du convertisseur d'électricité configurable (201) devient égale à une addition des tensions de sortie (Vc) des deux convertisseurs CC-CC isolés ($102C_1$-$102C_2$) et le courant de sortie (Ide) du convertisseur d'électricité configurable (201) est la tension de sortie (Vc) de l'un quelconque des courants de sortie (I1, I2) de quelconques de deux convertisseurs CC-CC isolés ($102C_1$-$102C_2$), et dans lequel lesdits n/2 groupes sont tour à tour connectables en série ou en parallèle sur la base de la tension de sortie que le convertisseur d'électricité (201) doit générer, en fonction dudit type de véhicule électrique (106).

2. Procédé (600) pour transférer de l'électricité à un véhicule électrique (106) depuis un réseau d'électricité en utilisant le dispositif de recharge (200) selon la revendication 1, comprenant :

la détection (501) d'une connexion physique du véhicule électrique (106) au module côté véhicule (103) du dispositif de recharge (200) ; et

l'actionnement sélectif (502) d'un commutateur de sélection de configuration (S1) d'un convertisseur d'électricité configurable (201) du dispositif de recharge (200A) pour adopter un d'un état fermé et d'un état ouvert, sur la base d'un besoin en tension du véhicule électrique (106),

dans lequel, lorsque le commutateur de sélection de configuration (S1) du module de sélection de configuration ($202_1$-$202_{n-1}$) est ouvert, à savoir, éteint, les première et deuxième diodes (D1, D2) sont polarisées en sens direct en raison de tensions de sortie (VC1, VC2) des deux convertisseurs CC-CC isolés ($102C_1$-$102C_2$) respectivement, apparaissant à travers celles-ci respectivement, dans lequel la polarisation en sens direct des première et deuxième diodes (D1, D2) a les deux convertisseurs CC-CC isolés ($102C_1$-$102C_2$) connectés en parallèle l'un à l'autre, dans lequel une tension de sortie (Vdc) du convertisseur d'électricité configurable (201) est la tension de sortie (Vc) de quelconques des convertisseurs CC-CC isolés ($102C_1$-$102C_n$) et le courant de sortie (Idc) du convertisseur d'électricité configurable (201) devient égal à une addition de courants de sortie (I1, I2) de deux convertisseurs CC-CC isolés $102C_1$-$102C_2$),

dans lequel, lorsque le commutateur de sélection de configuration (S1) est fermé, à savoir, allumé, les première et deuxième diodes (D1, D2) sont polarisées en sens inverse alors que la troisième diode (D3) connectée en série au commutateur de sélection de configuration (S1) devient polarisée en sens direct, dans lequel la polarisation en sens direct de la troisième diode D3 a les deux convertisseurs CC-CC isolés ($102C_1$-$102C_2$) connectés en série l'un à l'autre, dans lequel une tension de sortie (Vdc) du convertisseur d'électricité configurable (201) devient égale à une addition des tensions de sortie (Vc) des deux convertisseurs CC-CC isolés ($102C_1$-$102C_2$) et le courant de sortie (Idc) du convertisseur d'électricité configurable (201) est la tension de sortie (Vc) d'un quelconque des courants de sortie (I1, I2) de quelconques de deux convertisseurs CC-CC isolés ($102C_1$-$102C_2$), et dans lequel lesdits n/2 groupes sont tour à tour connectables en série ou en parallèle sur la base de la tension de sortie que le convertisseur d'électricité (201) doit générer, en fonction dudit type de véhiculeélectrique (106).

FIG 1

101A  101B  102A  102B  102C  103

102D

104A  104B  104

105A  105B  105

105C  105D  105E

100

106

(PRIOR ART)

EP 4 057 492 B1

FIG 2A

EP 4 057 492 B1

FIG 2B

EP 4 057 492 B1

FIG 3A

# FIG 3B

EP 4 057 492 B1

# FIG 4

FIG 5

500

```
        501

   YES    502A    NO        502

  502B              502C


        503
```

**REFERENCES CITED IN THE DESCRIPTION**

**Patent documents cited in the description**

- CN 108718156 A
- CN 108649664 A
- US 2020139839 A1
- US 2005270812 A1
- EP 3333005 A1
- CN 106646466 B
- CN 101442269

**Non-patent literature cited in the description**

- Ultra-Wide Output Voltage Range Power Supply Based on Modular Switched-Converter Principle. **LU YANJUN et al.** IEEE TRANSACTIONS ON POWER ELECTRONICS. INSTITUTE OF ELECTRICAL AND ELECTRONICS ENGINEERS, USA, 01 January 2020, 94-106